Europäisches Patentamt

European Patent Office

Office européen des brevets

(11) Publication number: **0 348 568**
**A1**

# (12) EUROPEAN PATENT APPLICATION

(21) Application number: 88305950.3

(51) Int. Cl.4: **A47J 37/07**

(22) Date of filing: 30.06.88

(43) Date of publication of application:
03.01.90 Bulletin 90/01

(84) Designated Contracting States:
AT BE CH DE ES FR GR IT LI LU NL SE

(71) Applicant: **TRADING POST RESTAURANTS LTD.**
**63 Carlton Place**
**Glasgow, G5 9TW, Scotland(GB)**

(72) Inventor: **McFarlane, Robert**
**c/o 63 Carlton Place**
**Glasgow G5 9TW Scotland(GB)**
Inventor: **McFarlane Walker, Stewart**
**c/o 63 Carlton Place**
**Glasgow G5 9TW Scotland(GB)**

(74) Representative: **MacDougall, Donald Carmichael et al**
**Messrs. Cruikshank & Fairweather 19 Royal Exchange Square**
**Glasgow G1 3AE, Scotland(GB)**

(54) **Tables.**

(57) A table (10) comprises a table top (11) having a centralised aperture into which a charcoal grill barbeque (12) is inset. Eating stations (13) are provided around the barbeque (12) on the table top (11) and a frame arrangement (21) fitted to barbeque (12) projects above the level of the table top (11) to prevent splashing thereof during use of the barbeque (12).

FIG.1

## TABLES

This invention relates to tables.

According to the present invention there is provided a table having a table top with an aperture and a charcoal grill barbeque set into said aperture.

Preferably the grill barbeque incorporates a griddle overlying a bed of charcoals, the griddle being substantially horizontal.

Preferably a stainless steel frame arrangement is releasably fitted at the peripheral interface between the grill barbeque and the table top, said frame arrangement including an upstanding portion peripherally surrounding the barbeque.

The present invention will now be described by way of example with reference to the accompanying drawings.

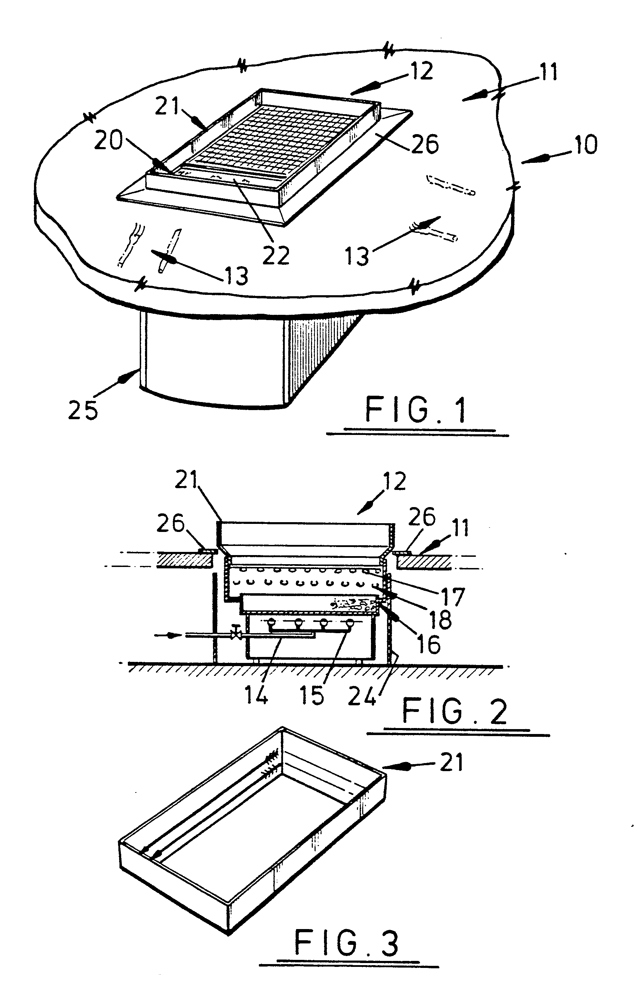

As is illustrated in Fig. 1 a table 10 comprises a table top 11 having a centralised rectilinear aperture wherein there is inset a charcoal grill barbeque 12. Barbeque 12 is positioned with respect to top 11 such that various eating stations 13 are provided around the barbeque 12 on the top 11.

As is more clearly shown in Fig. 2 barbeque 12 comprises a gas supply pipe 14 which delivers gas to a plurality of burners 15 which in turn heat a charcoal bed 16 preferably provided with lava charcoal pieces. Above bed 16 is located griddle 17 on which pieces of meat may be barbequed, the plane of griddle 17 being parallel with the plane of table top 11 and being approximately at the same level as table top 11. Between griddle 17 and bed 16 there is located a plurality of dished slats 18 for collecting grease emanating from beef being grilled on the barbeque, these slats 18 being inclined at an angle to the horizontal and delivering their collected grease into a grease tray 20 (Fig. 1).

A frame arrangement 21 shown in Fig. 3 is releasably . located at the interface between the barbeque 12 and the table top 11 and arrangement 21 includes a depending portion which is snugly seated on the barbeque and an upstanding portion which peripherally surrounds the barbeque 12 for the purpose of preventing splashes of grease from meat being cooked reaching the eating stations 13. At its end adjacent the grease tray 20 the frame arrangement 21 carries a plate 22 (Fig. 1) overlying the grease tray 20 to thereby provide a support surface for containers of various barbeque sauces. Plate 22 is releasable from the frame arrangement 21 and from the grease tray 20. A flat frame 26 lies on table top 11 surrounding frame arrangement 21 to neaten the appearance of the edge of the table top aperture in which the barbeque 12 is inset. The body of the barbeque 12 which is located beneath the table top 11 is contained by a casing (not shown) which is externally surrounded by a thermal barrier 24 which conveniently is in the form of asbestos sheeting and which in turn is externally surrounded by a wooden housing 25 (Fig. 1) which forms part of the table 10 and which supports the table top 11.

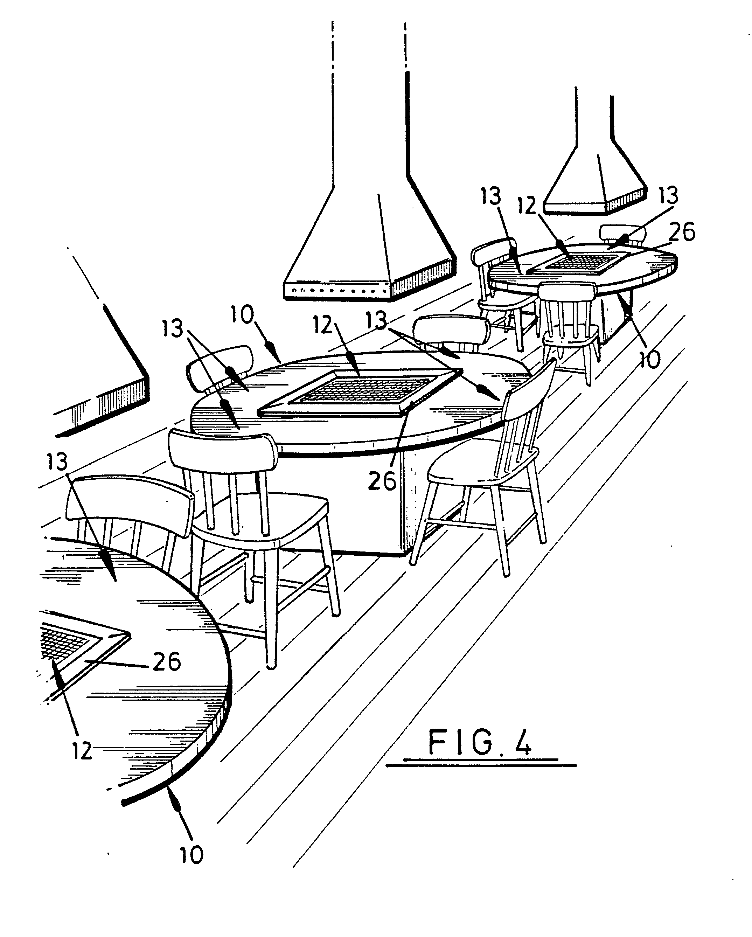

Fig. 4 illustrates the table 10 in operation, from which it will be seen that it is preferred to provide a fume extractor system vertically above the barbeque 12.

## Claims

1. A table having a table top with an aperture and characterised in that a charcoal grill barbeque (12) is set into said aperture.

2. A table as claimed in claim 1, characterised in that said barbeque (12) is gas fired (14,15) and has a charcoal bed (16) filled with lava charcoal pieces.

3. A table as claimed in either preceding claim, characterised in that the barbeque (12) comprises a griddle (17) which is substantially horizontal and at the level of the table top (11).

4. A table as claimed in any preceding claim, characterised in that a stainless steel frame arrangement (21) is releasably fitted at the peripheral interface between the barbeque (12) and the table top (11), said frame arrangment (21) including an upstanding portion peripherally surrounding the barbeque (12) and projecting above the level of the table top (11) to prevent splashing thereof during use of the barbeque (12).

5. A table as claimed in claim 4, characterised in that the frame arrangement (21) supports a cover (20) for a grease tray within the barbeque (12), said cover (20) functioning as a shelf for storing barbeque sauce containers during use of the barbeque (12).

FIG. 1

FIG. 2

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| E | GB-A-2 199 491 (McFARLANE) * Whole document * | 1-5 | A 47 J 37/07 |
| E | US-A-4 759 276 (SEGROVES) * Whole document * | 1-3 | |
| X | US-A-3 745 303 (EPPERSON) * Whole document * | 1,3 | |
| Y | | 2,4,5 | |
| Y | US-A-4 086 849 (SIMMONS) * Column 3, line 49 - column 4, line 25; figure 6 * | 2 | |
| Y | FR-A-1 531 208 (PAPPAS) * Page 3; figure 1 * | 2,4 | |
| Y | US-A-2 780 474 (FARAH) * Column 4, lines 37-44, figures 1,2 * | 5 | |
| X | US-A-3 491 744 (VON KOHORN) * Whole document * | 1,3 | TECHNICAL FIELDS SEARCHED (Int. Cl.4) |
| Y | | 2 | A 47 J |
| Y | US-A-2 898 846 (DEL FRANCIA) * Columns 2,3; figure 3 * | 2 | A 47 B |
| X | DE-U-7 413 234 (OLSBERGER) * Pages 13,16; figure 1 * | 1 | |

The present search report has been drawn up for all claims

| Place of search | Date of completion of the search | Examiner |
|---|---|---|
| THE HAGUE | 02-03-1989 | OFFMANN P.A. |